# EUROPÄISCHE PATENTSCHRIFT

(11) **EP 2 767 828 B1**
(45) Veröffentlichungstag und Bekanntmachung des Hinweises auf die Patenterteilung: **17.12.2014**
(21) Anmeldenummer: 14154705.9
(22) Anmeldetag: 11.02.2014
(51) Int. Cl.: G01N 30/46, B01D 15/18

(54) **Einspannvorrichtung zum Einspannen von mehreren Säulen für eine Vorrichtung zur Probenvorbereitung**
Clamping device for clamping multiple columns for a sample preparation apparatus
Dispositif de serrage pour le serrage de plusieurs colonnes pour un dispositif de préparation d'échantillon

(30) Priorität: 18.02.2013 DE 102013101596
(43) Veröffentlichungstag der Anmeldung: 20.08.2014
(73) Patentinhaber: LCTech GmbH, 84405 Dorfen (DE)
(72) Erfinder: Baumann, Maximilian, 81669 München (DE); Brandlhuber, Martin, 84427 St. Wolfgang (DE); Aulwurm, Uwe, 84149 Velden/Vils (DE)
(74) Vertreter: Tetzner, Michael

(56) Entgegenhaltungen:
- EP-A1- 0 755 842
- EP-A2- 0 078 435
- FR-A1- 2 947 233
- US-A- 4 389 313
- US-A- 4 732 672

## Beschreibung

Die Erfindung betrifft eine Einspannvorrichtung zum Einspannen von mehreren Säulen für eine Probenvorbereitung, insbesondere zur Analytik von chemischen Stoffen, wie beispielsweise für eine Chromatographie.

Aus der DE 31 43 075 A1 ist beispielsweise eine Vorrichtung zum Einspannen und schnellen Wechseln von Säulen für die Flüssigkeitschromatographie bekannt. Dabei werden ein oder mehrere Säulen parallel nebeneinander zwischen Spannblöcken, die Zu- und Abführungen für ein Laufmittel enthalten, eingespannt. Auch die US 4 732 672 A offenbart eine Vorrichtung zum schnellen Einspannen und Wechseln einer Säule zwischen zwei verschiebbaren Spannblöcken bekannt. Weiterhin ist es aus der US 2006/0243651 A1 bekannt, Säulen für derartige Anordnungen in axialer Richtung hintereinander anzuordnen.

Die DE 1 801 684 A betrifft einen Durchflussreaktor, der die Halterung von zwei übereinander angeordneten Säulen ermöglich, die über einen unteren, einen mittleren und einen oberen Halter fixiert werden. Zum Wechseln der Säulen sind die Halter nach Lösen von Befestigungsschrauben entlang einer gemeinsamen Halterstange verschiebbar.

EP 0 078 435 A2 offenbart eine Einspannvorrichtung zum Einspannen von Säulen, mit mehreren Spannblöcken. Die Säule wird zwischen Lager und Druckelement eingespannt, eventuell auch mit Hilfe eines Zentrierstücks oder eines Spann- und Dichtelement.

US 4 732 672 A offenbart eine Einspannvorrichtung zum Einspannen von mehreren Säulen und deutet auf eine Lösung, die ein Verbindungsstück involviert, sodass Säule und Filter/Vordersäule nicht in einer Reihe montiert werden können.

Der Erfindung liegt nun die Aufgabe zugrunde, eine platzsparende, flexible und einfach zu bedienende Einspannvorrichtung zum Einspannen von mehreren Säulen für eine Probenvorbereitung zu schaffen.

Erfindungsgemäß wird diese Aufgabe durch eine Einspannvorrichtung zum Einspannen von mehreren Säulen für eine Probenvorbereitung gelöst, die mehrere Spannblöcke und ein Verschiebemechanismus zum Verschieben wenigstens eines Spannblocks relativ zu einem gegenüberliegend angeordneten Spannblocks zwischen einer Öffnungsstellung und einer Einspannstellung vorsieht. Dabei können in der Öffnungsstellung eine Säule zwischen zwei gegenüberliegend angeordnete Spannblöcke eingesetzt werden und in der Einspannstellung wird die eingesetzte Säule zwischen den gegenüberliegend angeordneten Spannblöcken zur Herstellung einer Fluidverbindung zwischen Säule und wenigstens einem der gegenüberliegend angeordneten Spannblöcke eingespannt. Dabei sind wenigstens drei Spannblöcke in einer Reihe hintereinander auf einer Führungsschiene gehaltert, sodass wenigstens zwei Säulen in axialer Richtung hintereinander zwischen den Spannblöcken eingespannt werden können. Die auf der Führungsschiene gehalterten, gleitverschieblichen Spannblöcke stehen über Kopplungsmittel mit dem Verschiebemechanismus derart in Verbindung, dass eine Betätigung des Verschiebemechanismus von der Einspannstellung in die Öffnungsstellung eine Verschiebung aller gleitverschieblichen Spannblöcke bewirkt und dabei die Säulen freigeben werden.

Durch die Anordnung der Spannblöcke auf der Führungsschiene kann die Einspannvorrichtung sehr schnell und unkompliziert auf unterschiedliche Säulenlängen angepasst werden. Ein weiterer Vorteil der axialen Anordnung besteht auch darin, dass die Fluidverbindung zwischen den Säulen, sofern gewünscht, vergleichsweise kurz ist.

Gemäß einer bevorzugten Ausgestaltung der Erfindung ist einer der Spannblöcke ortsfest auf der Führungsschiene angeordnet, während wenigstens zwei weitere Spannblöcke gleitverschieblich auf der Führungsschiene gehaltert sind. Dabei kann der ortsfest auf der Führungsschiene angeordnete Spannblock das eine Ende der Reihe hintereinander angeordneter Spannblöcke bilden, während zumindest der letzte, gleitverschiebliche Spannblock am anderen Ende der Reihe mit dem Verschiebemechanismus zur Verschiebung des letzten gleitverschieblichen Spannblocks relativ zum ortsfesten Spannblock in Wirkverbindung steht. Eine Verschiebung des mit den Verschiebemechanismus in Verbindung stehenden gleitverschieblichen Spannblocks in Richtung des ortsfesten Spannblocks bewirkt dabei auch eine Verschiebung aller dazwischen angeordneten Spannblöcke zusammen mit den eingesetzten Säulen bis in die Einspannstellung. Mit der Verschiebung eines Spannblocks können daher eine Vielzahl von Säulen fluiddicht eingespannt werden.

Insbesondere bei längeren Säulen kann es zweckmäßig sein, zwischen zwei Spannblöcken wenigstens eine Säulenhalterung zur ausgerichteten Halterung der Säule in der Öffnungsstellung vorzusehen.

Weiterhin kann jeder Spannblock wenigstens ein Anschlussstück aufweisen, dass zur Herstellung der Fluidverbindung zwischen Säule und Spannblock mit einem Verschlusselement der Säule in der Einspannstellung zusammenwirkt. Dabei kann die Fluidverbindung zwischen Anschlussstück und Verschlusselement beispielsweise mittels Konus und Gegenkonus realisiert werden, wobei der Konus entweder am Anschlussstück oder am Verschlusselement und der Gegenkonus am entsprechend anderen Teil vorgesehen ist. Eine derartige Ausgestaltung hat den Vorteil, dass sich die Säulen beim Einspannen selbst zentrieren.

Eine besonders zweckmäßige Anordnung ergibt sich dann, wenn die zwischen dem ersten und letzten Spannblock angeordneten mittleren Spannblöcke jeweils zwei Anschlussstücke aufweisen, die auf gegenüberliegenden Seiten des jeweiligen Spannblocks angeordnet sind. Diese mittleren Spannblöcke können somit jeweils mit zwei Säulen gekoppelt werden.

Jeder Spannblock kann darüber hinaus wenigstens einen Fluidkanal aufweisen, der mit einem Ende im Anschlussstück und mit seinem anderen Ende an einer Anschlussstelle mündet. Dabei ist auch denkbar, dass die Anschlussstelle durch ein weiteres Anschlussstück auf einer gegenüberliegenden Seite des Spannblocks gebildet wird. Auf diese Weise könnte eine vergleichsweise kurze Verbindung zwischen zwei benachbarten Säulen hergestellt werden. Für viele Anwendungen wird es jedoch zweckmäßig sein, wenn die Anschlussstellen der Fluidkanäle an einer der Seiten des Spannblocks vorgesehen sind. Dort können dann die Fluidkanäle mit einer externen Ventilanordnung gekoppelt werden, um die für die jeweilige Anwendung zweckmäßigen Flusswege durch die einzelnen Säulen zu realisieren.

Der Verschiebemechanismus ist zweckmäßigerweise zur Verschiebung des wenigstens einen Spannblocks in beide Richtungen längs der Führungsschiene ausgelegt. Er kann einen elektrisch, hydraulisch oder pneumatisch betriebenen Aktuator umfassen. Weiterhin kann der Verschiebemechanismus wenigstens eine kraftbegrenzende Ausgleichsfeder aufweisen, wobei eine durch den Verschiebemechanismus erzeugte Verschiebekraft über die Ausgleichsfeder auf den wenigstens einen gleitverschieblichen Spannblock übertragen wird. Durch diese Ausgleichsfeder wird die über die Säulen übertragene Verschiebekraft begrenzt und vermeidet dadurch eine Überbelastung der Säulen. Im Falle der Verwendung eines hydraulischen oder pneumatischen Aktuators kann die Ausgleichsfeder entfallen.

Gemäß der Erfindung stehen die auf der Führungsschiene gehalterten, gleitverschieblichen Spannblöcke über Kopplungsmittel mit dem Verschiebemechanismus derart in Verbindung, dass eine Betätigung des Verschiebemechanismus von der Einspannstellung in die Öffnungsstellung eine Verschiebung aller gleitverschieblichen Spannblöcke bewirkt Dadurch werden die Säulen freigegeben und ein einfaches Entnehmen der Säulen wird ermöglicht. Diese Kopplungsmittel können beispielsweise durch eine Stange, mit Mitnehmerelementen, oder einen Seilzug gebildet werden. Die Kopplungsmittel sind so ausgelegt, dass sie die Spannblöcke nur in der Richtung von der Einspannstellung in die Öffnungsstellung mitnehmen.

Gemäß einer zweiten Ausgestaltung der Erfindung wäre es aber auch denkbar, dass die Kopplungsmittel die Spannblöcke in beiden Verschieberichtungen mitnehmen. Bei dieser Ausführung wäre es zweckmäßig, wenn zwischen jedem gleitverschieblichen Spannblock und dem Kopplungsmittel wenigstens eine kraftbegrenzende Ausgleichsfeder zur Limitierung der Einspannkraft zwischen der Säule und den Spannblöcken vorgesehen ist. Eine solche Ausführung reduziert die über die Säulen übertragenden Kräfte, sodass auch Säulen aus einem weicheren Material bzw. einer geringeren Drucktoleranz verwendet werden könnten.

Weitere Ausgestaltungen und Vorteile der Erfindung werden anhand der nachfolgenden Beschreibung und der Zeichnung näher erläutert.

In der Zeichnung zeigen
- Fig. 1: eine dreidimensionale Darstellung der Einspannvorrichtung in der Einspannstellung,
- Fig. 2: eine Seitenansicht der Einspannvorrichtung in der Öffnungsstellung,
- Fig. 3: eine Seitenansicht der Einspannvorrichtung in der Einspannstellung,
- Fig. 4: eine Querschnittdarstellung eines Spannblocks,
- Fig. 5: eine dreidimensionale Darstellung eines Spannblocks,
- Fig. 6: eine Längsschnittdarstellung im Bereich eines Spannblocks und
- Fig. 7: eine Querschnittdarstellung einer Säulenhalterung.

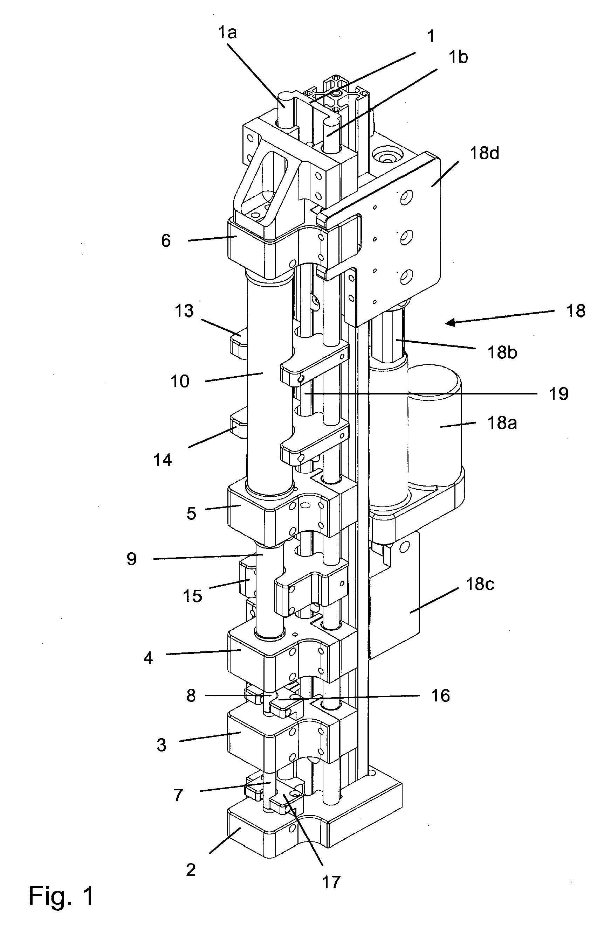

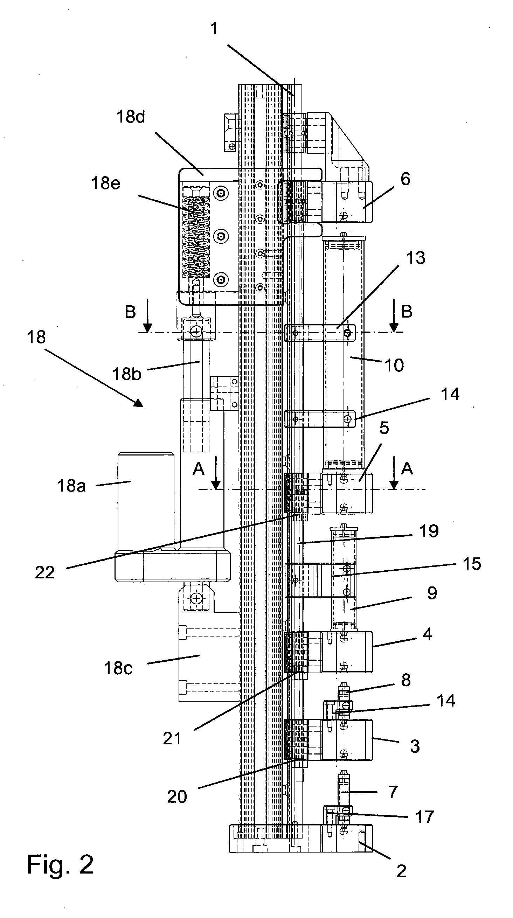

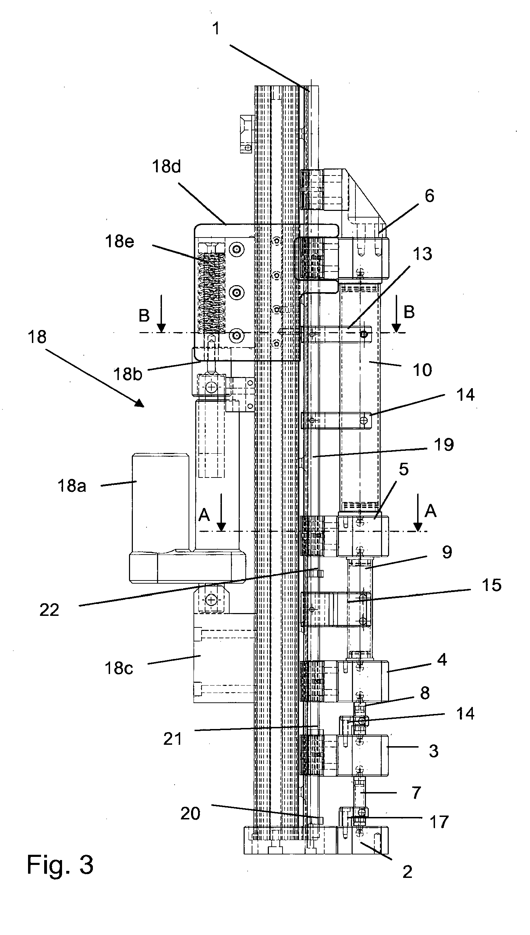

Die in den Figuren 1 bis 3 dargestellte Einspannvorrichtung weist eine Führungsschiene 1, einen ortsfest auf der Schiene angeordneten Spannblock 2 und vier auf der Führungsschiene gleitverschieblich gehalterte Spannblöcke 3 bis 6 auf. In der Öffnungsstellung gemäß Fig. 2 sind die Spannblöcke soweit voneinander entfernt, dass Säulen 7 bis 10 zwischen jeweils zwei Spannblöcke derart eingesetzt werden können, dass sie in der Einspannstellung gemäß Fig. 3 in axialer Richtung hintereinander zwischen den Spannblöcken eingespannt sind.

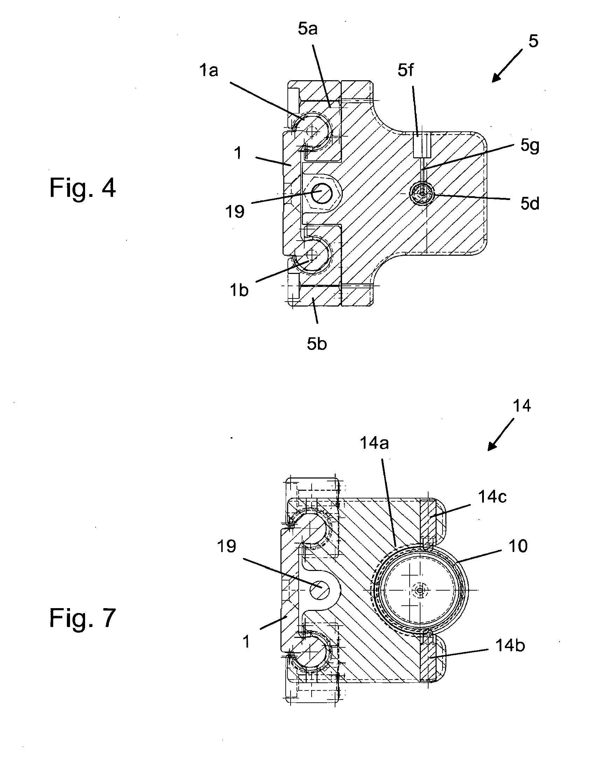

Anhand der Figuren 4 bis 6 wird im Folgenden der Spannblock 5 stellvertretend für einen der gleitbeweglichen Spannblöcke 3 bis 6 näher erläutert. Die Führungsschiene 1 weist zwei parallel zueinander und in Längsrichtung verlaufende, im Querschnitt etwa kreisförmige Schienen 1a, 1b auf, die mit entsprechend komplementär ausgestalteten Gleitelementen 5a, 5b des Spannblocks 5 zusammenwirken. Prinzipiell könnten die Gleitelemente einstückig mit dem restlichen Spannblock ausgebildet sein. Da der Spannblock jedoch zweckmäßigerweise aus Metall besteht, sind die Gleitelemente 5a, 5b im dargestellten Ausführungsbeispiel als separate Kunststoffteile ausgebildet, die mit den restlichen Spannblöcken verschraubt sind. Durch eine geeignete Auswahl des Materials der Gleitelemente 5a, 5b können gute Gleiteigenschaften des Spannblocks 5 auf die Führungsschiene 1 gewährleistet werden.

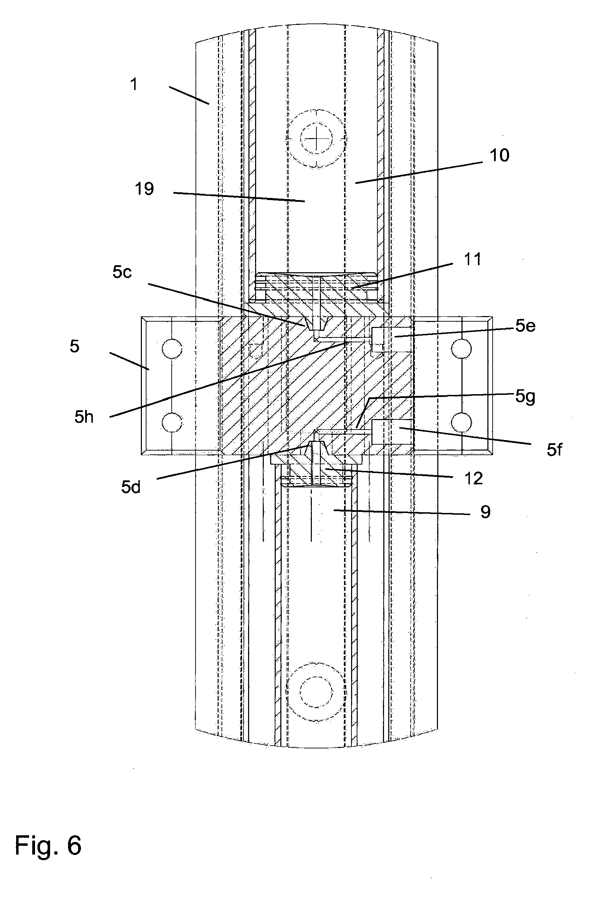

Auf den den Säulen zugewandten Seiten sind die Spannblöcke 5 mit Anschlussstücken 5c, 5d ausgestattet, die im dargestellten Ausführungsbeispiel als konische Anschlusszapfen ausgebildet ist. Die in die Einspannvorrichtung einzuspannenden Säulen 7 bis 10 sind an ihren Enden mit jeweils einem Verschlusselement 11, 12 versehen, das zur Herstellung der Fluidverbindung zwischen Säule und Spannblock entsprechend komplementär zum Anschlussstück, also mit einem Gegenkonus, ausgebildet ist. Aus Fig. 6 ist ersichtlich, wie die Anschlussstücke 5c, 5d des Spannblocks 5 mit den Verschlusselementen 11, 12 der Säulen 10, 9 zusammenwirken.

Im Spannblock 5 ist weiterhin wenigstens ein Fluidkanal, vorzugsweise aber zwei Fluidkanäle 5g, 5h vorgesehen, die mit einem Ende im Anschlussstück 5c bzw. 5d und mit dem anderen Ende an einer Anschlussstelle 5e, 5f münden. Die Anschlussstellen sind zweckmäßigerweise auf einer der beiden verbleibenden Seitenflächen des Spannblocks 5 vorgesehen.

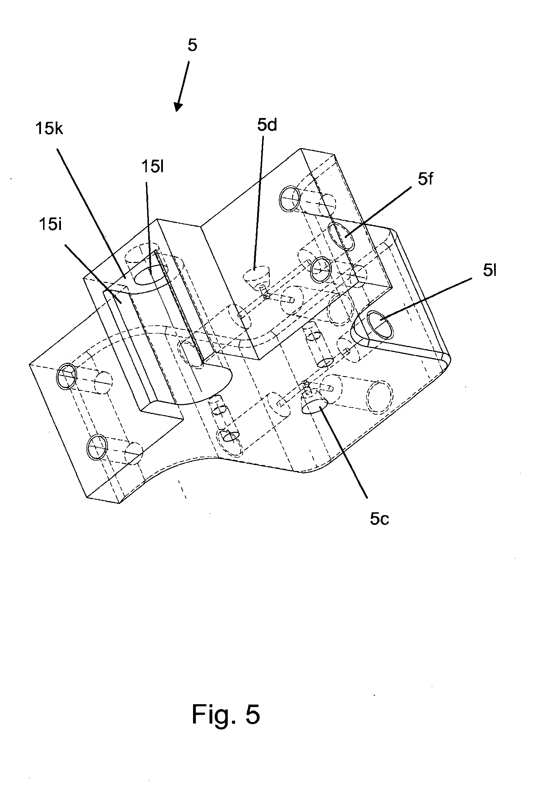

In Fig. 5 sind verschiedene Fluidverbindungen gestrichelt angedeutet. Zweckmäßigerweise sind jedoch nur diejenigen Kanäle ausgearbeitet, die auch tatsächlich für die gewünschte Anwendung benötigt werden. Es wäre aber durchaus auch denkbar, ggf. vorhandene, nicht benutzte Kanäle mit einem geeigneten Ventil oder Verschlussstopfen zu verschließen. Es wäre weiterhin möglich, den Fluidkanal zur Verbindung der beiden Anschlussstücke 5c, 5d vorzusehen. Bei seitlich herausgeführten Fluidkanälen 5g, 5h können diese mit einer externen Ventilanordnung verbunden werden, um die Strömungspfade für die gewünschte Anwendung bereitzustellen.

Gemäß einem bevorzugten Ausführungsbeispiel ist die Führungsschiene 1 vertikal ausgerichtet, sodass die Säulen ebenfalls vertikal übereinander ausgerichtet sind. Zum Einspannen der Säulen werden diese lediglich mit ihren Verschlusselementen in die zugehörigen Anschlussstücke des jeweils unteren Spannblocks eingesteckt, wobei sich automatisch eine im Wesentlichen senkrechte Ausrichtung der Säule ergibt. Um zu verhindern, dass eine in der Öffnungsstellung der Einspannvorrichtung eingesetzte Säule versehentlich herausgestoßen wird, können für jede Säule zusätzliche Säulenhalterungen 13 bis 17 zwischen den Spannblöcken vorgesehen werden. Diese Säulenhalterungen, von denen stellvertretend die Säulenhalterung 14 in Fig. 7 näher dargestellt ist, sind ebenfalls auf der Führungsschiene gleitverschieblich bzw. können auch fixiert gehaltert sein. Die Säulenhalterung weist eine Ausnehmung 14a zur Aufnahme der entsprechenden Säule auf und ist zudem mit Klemmmitteln 14b, 14c ausgestattet, welche die Säule in der Säulenhalterung festhalten. Während die Säulenhalterungen 13 bis 15 mit Abstand zu den Spannblöcken vorgesehen sind, wurden bei diesem Ausführungsbeispiel die Säulenhalterungen 16 und 17 an den Spannblöcken 2 bzw. 3 befestigt. Dies ist insbesondere bei kurzen und dünnen Säulen von Vorteil.

Die Einspannvorrichtung weist ferner einen Verschiebemechanismus 18 auf, der mit dem gleitverschieblichen Spannblock 6 zu dessen Verschiebung längs der Führungsschiene 1 gekoppelt ist. Dieser Spannblock bildet das Ende der Reihe hintereinander angeordneter Spannblöcke und kann durch den Verschiebemechanismus in beide Richtung längs der Führungsschiene verschoben werden. Der Verschiebemechanismus ist hier als Linearaktuator mit einem Motor 18a und eine Ausfahrstange 18b ausgestattet. Mit einem Ende stützt sich der Verschiebemechanismus an einen Widerlager 18c ab und ist mit seinem anderen Ende über Kopplungselemente 18d mit dem gleitverschieblichen Spannblock 6 gekoppelt. Aus Fig. 2 wird ersichtlich, dass die Bewegung der Ausfahrstange 18b nicht unmittelbar auf die Kopplungselemente 18d, sondern vielmehr über eine kraftbegrenzende Ausgleichsfeder 18e auf die Kopplungselemente 18d übertragen wird.

Um zu verhindern, dass die gleitverschieblichen Spannblöcke 3 bis 6 alle nach unten gleiten, wenn keine Säulen eingesetzt sind, hat man Kopplungsmittel in Form einer Gewindestange 19 vorgesehen. Für jeden mittleren Spannblock 3, 4 und 5 sind auf dem Kopplungsmittel 19 Mitnehmerelemente 20, 21, 22 in Form von Muttern aufgebracht, die als Anschlag für die Spannblöcke 3, 4, 5 in der Öffnungsstellung der Einspannvorrichtung gemäß Fig. 2 dienen. Aus Fig. 5 ist ersichtlich, dass der Spannblock auf seiner der Führungsschiene 1 zugewandten Seite eine Ausnehmung 15i zur Aufnahme der Gewindestange aufweist. Diese Ausnehmung 15i wird auf einer Seite durch eine Wandung 15k begrenzt, die eine Bohrung 151 zur Durchführung der Gewindestange aufweist. Diese Wandung kommt dann in der Öffnungsstellung mit dem zugehörigen Mitnehmerelement 20, 21, 22 in Kontakt und verhindert ein weiteres Heruntergleiten des Spannblocks. Das als Gewindestange ausgebildete Kopplungsmittel 19 ist mit dem letzten in der Reihe befindlichen gleitverschieblichen Spannblock 6 fest verbunden, sodass eine Verschiebung des Spannblocks 6 durch den Verschiebemechanismus 18 gleichzeitig auch eine entsprechende Verschiebung des als Gewindestange ausgebildeten Kopplungsmittels 19 bewirkt. Bei einer Bewegung des Verschiebemechanismus von der Einspannstellung gemäß Fig. 3 in die Öffnungsstellung gemäß Fig. 2 werden somit alle mittleren Spannblöcke bei einer Verschiebung des oberen Spannblocks 6 über die Mitnehmerelemente 20, 21, 22 mit nach oben verschoben, sobald die Mitnehmerelemente mit den zugehörigen Spannblöcken in Kontakt kommen. Die eingespannten Säulen ruhen dabei mit ihrem jeweils unteren Ende auf dem zugehörigen Spannblock, während im Bereich ihres oberen Endes ein ausreichender Spalt zum nächsten Spannblock entsteht (siehe Fig. 2). Die Säulen können dann in dieser Öffnungsstellung bequem herausgenommen bzw. eingesetzt werden. Zum Einspannen der Säulen wir der Verschiebemechanismus in entgegengesetzter Richtung betätigt, sodass sich der oberste Spannblock 6 nach unten, d. h. in Richtung des ortsfesten Spannblocks 2 bewegt. Dabei verschiebt sich auch das als Gewindestange ausgebildete Kopplungsmittel 19 nach unten, sodass sich alle dazwischen befindlichen Spannblöcke 3, 4, 5 aufgrund der Schwerkraft ebenfalls nach unten bewegen, bis die Spannblöcke im Bereich ihrer Anschlussstücke mit den zugehörigen Verschlusselementen der eingesetzten Säulen in Kontakt kommen.

Zur Herstellung einer fluiddichtenden Verbindung von Säule und Spannblock wird durch den obersten Spannblock 6 eine Einspannkraft übertragen, die sich über die Säulen und die Spannblöcke bis zum untersten, ortsfesten Spannblock überträgt. Damit diese Einspannkraft nicht zum Bruch der Säulen führt und um etwaige Längentoleranzen auszugleichen, ist die kraftbegrenzende Ausgleichsfeder 18e vorgesehen. Die Mitnehmerelemente 20, 21, 22 sind in ihrer Position auf der Gewindestange auf die entsprechenden Säulenlängen eingestellt, wobei die Position so bemessen ist, dass zwischen Mitnehmerelement und Spannblock in der Einspannstellung gemäß Fig. 3 ein Abstand verbleibt, sodass sicher gestellt ist, dass jede Säule mit der erforderlichen Einspannkraft in ihre zugehörigen Spannblöcke gedrückt wird.

Aus dem dargestellten Ausführungsbeispiel ist ersichtlich, dass auch unterschiedlich große Säulen eingesetzt werden können. Sollten bei einer Anwendung nicht alle Säulenplätze benötigt werden, kann einfach eine Dummy-Säule, beispielsweise ein einfaches Edelstahlrohr, welches geeignete Anschlüsse besitzt, eingesetzt werden.

Die vertikale Ausrichtung der Einspannvorrichtung hat zum einen den Vorteil, dass die mittleren Spannblöcke 3, 4, 5 ohne mechanischer Einwirkung von außen, alleine aufgrund der Schwerkraft von der Öffnungsstellung gemäß Fig. 2 in die Schließstellung gemäß Fig. 3 gleiten. Auch das Einsetzen und Ausrichten der Säulen in der Öffnungsstellung gemäß Fig. 2 wird erleichtert, da sich die Säulen automatisch zentrieren, wenn Sie mit ihren Verschlusselementen auf den zugehörigen unteren Spannblock aufgesteckt werden. Weiterhin bleibt auch die Fluidik (Aufbringen der Probe, Verteilung etwaiger Luftblasen, Fluss durch die Säule) in jedem Fall symmetrisch. Des Weiteren lässt sich die Einspannvorrichtung einfach Spülen. Die gesamte Einspanneinrichtung ist zudem relativ schmal ausgebildet, sodass mehrere derartige Einspannvorrichtungen ohne allzu großen Platzbedarf nebeneinander angeordnet werden können.

## Patentansprüche

1. Einspannvorrichtung zum Einspannen von mehreren Säulen (7-10) für eine Probenvorbereitung, mit mehreren Spannblöcken (2-6) und einem Verschiebemechanismus (18) zum Verschieben wenigstens eines Spannblocks (6) relativ zu einem gegenüberliegend angeordneten Spannblock (2) zwischen einer Öffnungsstellung und einer Einspannstellung, wobei in der Öffnungsstellung eine Säule (7-10) zwischen zwei gegenüberliegend angeordnete Spannblöcke (2-6) eingesetzt werden kann und die eingesetzte Säule in der Einspannstellung zwischen den gegenüberliegend angeordneten Spannblöcken zur Herstellung eine Fluidverbindung zwischen Säule und wenigstens einem der gegenüberliegend angeordneten Spannblöcke eingespannt ist, wobei
wenigstens drei Spannblöcke (2-6) in einer Reihe hintereinander auf einer Führungsschiene gehaltert sind, sodass wenigstens zwei Säulen (7-10) in axialer Richtung hintereinander zwischen den Spannblöcken (2-6) eingespannt werden können
**dadurch gekennzeichnet, dass** die auf der Führungsschiene (1) gehalterten, gleitverschieblichen Spannblöcke (3-6) über Kopplungsmittel (19) mit dem Verschiebemechanismus (18) derart in Verbindung stehen, dass eine Betätigung des Verschiebemechanismus (18) von der Einspannstellung in die Öffnungsstellung eine Verschiebung aller gleitverschieblichen Spannblöcke (3-6) bewirkt und dabei die Säulen freigeben werden.

2. Einspannvorrichtung nach Anspruch 1, **dadurch gekennzeichnet, dass** einer der Spannblöcke (2) ortsfest auf der Führungsschiene (1) angeordnet ist, während wenigstens zwei weitere Spannblöcke (3-6) gleitverschieblich auf der Führungsschiene (1) gehaltert sind.

3. Einspannvorrichtung nach Anspruch 2, **dadurch gekennzeichnet, dass** der ortsfest auf der Führungsschiene (1) angeordnete Spannblock (2) das eine Ende der Reihe hintereinander angeordneter Spannblöcke bildet und zumindest der letzte, gleitverschiebliche Spannblock (6) am anderen Ende der Reihe mit dem Verschiebemechanismus (18) zur Verschiebung des letzten gleitverschieblichen Spannblocks (6) relativ zum ortsfesten Spannblock (2) in Wirkverbindung steht.

4. Einspannvorrichtung nach Anspruch 3, **dadurch gekennzeichnet, dass** eine Verschiebung des mit dem Verschiebemechanismus (18) in Verbindung stehenden gleitverschieblichen Spannblocks (6) in Richtung des ortsfesten Spannblocks (2) auch eine Verschiebung aller dazwischen angeordneten Spannblöcke (3-5) zusammen mit den eingesetzten Säulen (7-10) bis in die Einspannstellung bewirkt.

5. Einspannvorrichtung nach Anspruch 1, **dadurch gekennzeichnet, dass** zumindest zwischen zwei Spannblöcken (2-6) wenigstens eine Säulenhalterung (15-17) zur ausgerichteten Halterung der Säulen (7-10) in der Öffnungsstellung vorgesehen ist.

6. Einspannvorrichtung nach Anspruch 1, **dadurch gekennzeichnet, dass** der Verschiebemechanismus (18) zur Verschiebung des Spannblocks (6) in beide Richtungen längs der Führungsschiene (1) ausgelegt ist.

7. Einspannvorrichtung nach Anspruch 1, **dadurch gekennzeichnet, dass** jeder Spannblock (2-6) wenigstens ein Anschlussstück (5c, 5d) aufweist, das zur Herstellung der Fluidverbindung zwischen Säule (7-10) und dem Spannblock (2-6) mit einem Verschlusselement (11, 12) der Säule (7-10) in der Einspannstellung zusammenwirkt.

8. Einspannvorrichtung nach Anspruch 7, **dadurch gekennzeichnet, dass** die Fluidverbindung zwischen Anschlussstück (5c, 5d) und Verschlusselement (11, 12) mittels einem Konus und einem Gegenkonus realisiert ist, wobei der Konus entweder am Anschlussstück (5c, 5d) oder am Verschlusselement (11, 12) und der Gegenkonus am anderen Teil vorgesehen ist.

9. Einspannvorrichtung nach Anspruch 7 oder 8, **dadurch gekennzeichnet, dass** die zwischen dem ersten und letzten Spannblock (2, 6) angeordneten mittleren Spannblöcke (3-5) jeweils zwei Anschlussstücke (5c, 5d) aufweisen, die auf gegenüberliegenden Seiten des jeweiligen Spannblocks angeordnet sind.

10. Einspannvorrichtung nach Anspruch 7, **dadurch gekennzeichnet, dass** jeder Spannblock (2-6) wenigstens einen Fluidkanal (5g-5h) aufweist, der mit einem Ende im Anschlussstück (5c, 5d) und mit seinem anderen Ende an einer Anschlussstelle (5e, 5f) mündet.

11. Einspannvorrichtung nach Anspruch 10, **dadurch gekennzeichnet, dass** die Anschlussstelle durch ein weiteres Anschlussstück (5c, 5d) auf einer gegenüberliegenden Seite des Spannblocks (2-6) gebildet wird.

12. Einspannvorrichtung nach Anspruch 1, **dadurch gekennzeichnet, dass** der Verschiebemechanismus (18) wenigstens eine kraftbegrenzende Ausgleichsfeder (18e) aufweist, wobei eine durch den Verschiebemechanismus (18) erzeugte Verschiebekraft über die Ausgleichsfeder (18e) auf den wenigstens einen gleitverschieblichen Spannblock (6) übertragen wird.

13. Einspannvorrichtung nach Anspruch 1, **dadurch gekennzeichnet, dass** die Kopplungsmittel (19) durch eine Stange mit Mitnehmerelementen (19-22) oder einen Seilzug gebildet werden.

14. Einspannvorrichtung nach Anspruch 1, **dadurch gekennzeichnet, dass** die auf der Führungsschiene (1) gehalterten gleitverschieblichen Spannblöcke (3-6) über Kopplungsmittel (19) mit dem Verschiebemechanismus (18) derart in Verbindung stehen, dass eine Betätigung des Verschiebemechanismus (18) von der Öffnungsstellung in die Einspannstellung und umgekehrt eine Verschiebung aller gleitverschieblichen Spannblöcke (3-6) bewirkt.

15. Einspannvorrichtung nach Anspruch 14, **dadurch gekennzeichnet, dass** zwischen jedem gleitverschieblichen Spannblock (3-6) und dem Kopplungsmittel (19) wenigstens eine kraftbegrenzende Ausgleichsfeder zur Limitierung der Einspannkraft zwischen der Säule (7-10) und den Spannblöcken (2-6) vorgesehen ist.

## Claims

1. Clamping device for clamping a plurality of columns (7-10) for sample preparation having a plurality of clamping blocks (2-6) and a displacement mechanism (18) for displacing at least one clamping block (6) relative to an opposing clamping block (2) between an open position and a clamping position, wherein, in the open position, a column (7-10) can be inserted between two opposing clamping blocks (2-6) and, in the clamping position, the inserted column is clamped between the opposing clamping blocks in order to produce a fluid connection between the column and at least one of the opposing clamping blocks, wherein
at least three clamping blocks (2-6) are retained in a row one behind the other on a guiding rail so that at least two columns (7-10) can be clamped in an axial direction one behind the other between the clamping blocks (2-6), **characterised in that** the slidingly displaceable clamping blocks (3-6) which are retained on the guiding rail (1) are connected to the displacement mechanism (18) by coupling means (19) in such a manner that an actuation of the displacement mechanism (18) from the clamping position into the open position brings about a displacement of all the slidingly displaceable clamping blocks (3-6) and the columns are released.

2. Clamping device according to claim 1, **characterised in that** one of the clamping blocks (2) is arranged in a fixed manner on the guiding rail (1) whilst at least two other clamping blocks (3-6) are retained on the guiding rail (1) in a slidingly displaceable manner.

3. Clamping device according to claim 2, **characterised in that** the clamping block (2) which is arranged in a fixed manner on the guiding rail (1) forms one end of the row of clamping blocks which are arranged one behind the other and at least the last, slidingly displaceable clamping block (6) at the other end of the row is operationally connected to the displacement mechanism (18) in order to displace the last slidingly displaceable clamping block (6) relative to the fixed clamping block (2).

4. Clamping device according to claim 3, **characterised in that** a displacement of the slidingly displaceable clamping block (6) which is connected to the displacement mechanism (18) in the direction of the fixed clamping block (2) also brings about a displacement of all the clamping blocks (3-5) which are arranged therebetween together with the inserted columns (7-10) as far as the clamping position.

5. Clamping device according to claim 1, **characterised in that** at least between two clamping blocks (2-6) at least one column retention member (15-17) is provided for orientated retention of the columns (7-10) in the open position.

6. Clamping device according to claim 1, **characterised in that** the displacement mechanism (18) is constructed to displace the clamping block (6) in both directions along the guiding rail (1).

7. Clamping device according to claim 1, **characterised in that** each clamping block (2-6) has at least one connection piece (5c, 5d), which cooperates with a closure element (11, 12) of the column (7-10) in the clamping position in order to produce the fluid connection between the column (7-10) and the clamping block (2-6).

8. Clamping device according to claim 7, **characterised in that** the fluid connection between the connection piece (5c, 5d) and closure element (11, 12) is produced by means of a cone and counter-cone, the cone being provided either on the connection piece (5c, 5d) or on the closure element (11, 12) and the counter-cone being provided on the other portion.

9. Clamping device according to claim 7 or claim 8, **characterised in that** the central clamping blocks (3-5) which are arranged between the first and last clamping block (2, 6) each have two connection pieces (5c, 5d) which are arranged at opposing sides of the respective clamping block.

10. Clamping device according to claim 7, **characterised in that** each clamping block (2-6) has at least one fluid channel (5g-5h) which opens at one end in the connection piece (5c, 5d) and at the other end thereof at a connection location (5e, 5f).

11. Clamping device according to claim 10, **characterised in that** the connection location is formed by another connection piece (5c, 5d) at an opposing side of the clamping block (2-6).

12. Clamping device according to claim 1, **characterised in that** the displacement mechanism (18) has at least one force-limiting compensation spring (18e), a displacement force which is produced by means of the displacement mechanism (18) being transmitted via the compensation spring (18e) to the at least one slidingly displaceable clamping block (6).

13. Clamping device according to claim 1, **characterised in that** the coupling means (19) are formed by a rod, with carrier elements (19-22), or a Bowden cable.

14. Clamping device according to claim 1, **characterised in that** the slidingly displaceable clamping blocks (3-6) which are retained on the guiding rail (1) are connected to the displacement mechanism (18) by way of coupling means (19) in such a manner that an actuation of the displacement mechanism (18) from the open position into the clamping position and vice versa brings about a displacement of all the slidingly displaceable clamping blocks (3-6).

15. Clamping device according to claim 14, **characterised in that** at least one force-limiting compensation spring is provided between each slidingly displaceable clamping block (3-6) and the coupling means (19) in order to limit the clamping force between the column (7-10) and the clamping blocks (2-6).

## Revendications

1. Dispositif de serrage de plusieurs colonnes (7 - 10) pour une préparation d'échantillons qui comprend plusieurs blocs de serrage (2 - 6) et un mécanisme de déplacement (18) pour le déplacement d'au moins un bloc de serrage (6) par rapport à un bloc de serrage (2) disposé à l'opposé, entre une position d'ouverture et une position de serrage, sachant que, dans la position d'ouverture, une colonne (7 - 10) peut être insérée entre deux blocs de serrage (2 - 6) disposés à l'opposé l'un de l'autre, et que, dans la position de serrage, la colonne insérée est serrée entre les blocs de serrage, disposés à l'opposé l'un de l'autre, pour la réalisation d'une liaison de fluide entre la colonne et au moins l'un des blocs de serrage opposés,
sachant qu'au moins trois blocs de serrage (2 - 6) sont maintenus, en rangée, l'un derrière l'autre, sur un rail de guidage (1), de telle manière qu'au moins deux colonnes (7 - 10) puissent être serrées l'une derrière l'autre, dans la direction axiale, entre les blocs de serrage (2 - 6),
**caractérisé en ce que** les blocs de serrage (3 - 6), maintenus à glissement sur le rail de guidage (1), sont reliés au mécanisme de déplacement (18), par l'intermédiaire de moyens de couplage (19), de telle manière qu'un actionnement du mécanisme de déplacement (18), de la position de serrage à la position d'ouverture, donne lieu à un déplacement de tous les blocs de serrage (3 - 6) coulissants et, ce faisant, libère les colonnes.

2. Dispositif de serrage selon la revendication 1,
**caractérisé en ce que** l'un (2) des blocs de serrage est installé fixement sur le rail de guidage (1) tandis qu'au moins deux autres blocs de serrage (3 - 6) sont maintenus à glissement sur le rail de guidage (1).

3. Dispositif de serrage selon la revendication 2,
**caractérisé en ce que** le bloc de serrage (2), qui est agencé fixement sur le rail de guidage (1), forme la fin de la rangée des blocs de serrage disposés les uns derrière les autres, et qu'au moins le dernier bloc mobile (6), à l'autre extrémité de la rangée, est en liaison active avec le mécanisme de déplacement (18) pour le déplacement dudit dernier bloc de serrage coulissant (6) par rapport au bloc de serrage fixe (2).

4. Dispositif de serrage selon la revendication 3,
**caractérisé en ce qu'** un déplacement du bloc de serrage mobile, coulissant (6), relié au mécanisme de déplacement (18), dans la direction du bloc de serrage fixe (2), a pour effet de déplacer aussi, jusque dans la position de serrage, tous les blocs de serrage (3 - 5), disposés entre eux, en commun avec les colonnes (7 - 10) insérées.

5. Dispositifdeserrageselonlarevendication1,
**caractérisé en ce qu'au** moins entre deux blocs de serrage (2 - 6) est prévu au moins un support de colonne (15 - 17) pour maintenir les colonnes (7 - 10) orientées dans la position d'ouverture.

6. Dispositif de serrage selon la revendication 1,
**caractérisé en ce que** le mécanisme de déplacement (18) est conçu pour le déplacement du bloc de serrage (6) dans les deux directions, le long du rail de guidage (1).

7. Dispositif de serrage selon la revendication 1,
**caractérisé en ce que** chaque bloc de serrage (2 - 6) est doté d'au moins une pièce de raccordement (5c, 5d) qui, pour établir le liaison de fluide entre la colonne (7 - 10) et le blocs de serrage (2 - 6), est en liaison active avec un élément de fermeture (11, 12) de la colonne (7 - 10) dans la position de serrage.

8. Dispositif de serrage selon la revendication 7,
**caractérisé en ce que** la liaison de fluide entre la pièce de raccordement (5c, 5d) et l'élément de fermeture (11, 12) est réalisée au moyen d'un cône et d'un contre-cône, sachant que le cône est prévu soit sur la pièce de raccordement (5c, 5d) soit sur l'élément de fermeture (11, 12) et que le contre-cône est prévu sur l'autre pièce.

9. Dispositif de serrage selon revendication 7 ou 8,
**caractérisé en ce que** les blocs de serrage centraux (3 - 5), disposés entre le premier et le dernier des blocs de serrage (2 - 6), sont dotés chacun de deux pièces de raccordement (5c, 5d) qui sont disposées sur des côtés opposés du bloc respectif.

10. Dispositif de serrage selon la revendication 7,
**caractérisé en ce que** chacun des blocs de serrage (2 - 6) est doté d'au moins un canal de fluide (5g - 5h) qui débouche, à l'une de ses extrémités, dans la pièce de raccordement (5c, 5d) et, avec sont autre extrémité, dans un raccord (5e - 5f).

11. Dispositif de serrage selon la revendication 10,
**caractérisé en ce que** le raccord est formé par une autre pièce de raccordement (5c, 5d) sur un côté du bloc de serrage (2 - 6) opposé.

12. Dispositif de serrage selon la revendication 1,
**caractérisé en ce que** le mécanisme de déplacement (18) est doté d'au moins un ressort de compensation (18e) de limitation de force, sachant qu'une force de poussée exercée par le mécanisme de déplacement (18) est transmise à au moins un bloc coulissant (6) par l'intermédiaire du ressort de compensation (18e).

13. Dispositif de serrage selon la revendication 1,
**caractérisé en ce que** les moyens de couplage (19) sont formés par une barre avec des éléments d'entraînement (19 - 22) ou un dispositif de traction à câble.

14. Dispositif de serrage selon la revendication 1,
**caractérisé en ce que** les blocs de serrage mobiles (3 - 6), maintenus à glissement sur le rail de guidage (1), sont en liaison avec le mécanisme de déplacement (18) par l'intermédiaire des moyens de couplage (19), de telle manière qu'un actionnement du mécanisme de déplacement (18) de la position d'ouverture à la position de serrage et inversement provoque un déplacement de tous les blocs de serrage coulissants (3 - 6).

15. Dispositif de serrage selon la revendication 14,
**caractérisé en ce que,** entre chacun des blocs mobiles, coulissants (3 - 6) et les moyens de couplage (19), un ressort de compensation de limitation de force est prévu pour limiter la force de serrage entre les colonnes (7 - 10) et les blocs de serrage (2 - 6).
